# EUROPÄISCHE PATENTSCHRIFT

(11) **EP 0 315 083 B1**
(45) Veröffentlichungstag und Bekanntmachung des Hinweises auf die Patenterteilung: **10.02.1993**
(21) Anmeldenummer: 88118041.8
(22) Anmeldetag: 29.10.1988
(51) Int. Cl.: C09D 5/03, C09D 5/46

(54) **Verfahren zur Erhöhung der elektrostatischen Aufladbarkeit von Pulverlacken oder Pulvern und deren Verwendung zur Oberflächenbeschichtung von festen Gegenständen**
Process for increasing the electrostatic chargeability of powder paints or powders and their use in the surface coating of solid items
Procédé pour augmenter la faculté des peintures pulvérulentes ou des poudres à se charger électrostatiquement et leur utilisation dans le revêtement de surface d'objets solides

(30) Priorität: 05.11.1987 DE 3737495
(43) Veröffentlichungstag der Anmeldung: 10.05.1989
(73) Patentinhaber: HOECHST AKTIENGESELLSCHAFT, 65926 Frankfurt am Main (DE)
(72) Erfinder: Macholdt, Hans-Tobias, Dr., D-6100 Darmstadt (DE); Sieber, Alexander, Dr., D-6230 Frankfurt am Main 80 (DE); Godau, Claus, D-6229 Kiedrich (DE); Manz, Albrecht, Dr., D-6200 Wiesbaden (DE)

(56) Entgegenhaltungen:
- US-A- 3 873 495
- PATENT ABSTRACTS OF JAPAN, Band 12, Nr. 301 (C-521)[3148], 16. August 1988; & JP-A-63 075 077 (HODOGAYA CHEMICAL CO.) 05-04-1988
- PATENT ABSTRACTS OF JAPAN, Band 13, Nr. 15 (C-559)[3363], 13. Januar 1989; & JP-A-63 221 174 (SOMAR CORP.) 14-09-1988

## Beschreibung

Verfahren zur Erhöhung der elektrostatischen Aufladbarkeit von Pulverlacken oder Pulvern und deren Verwendung zur Oberflächenbeschichtung von festen Gegenständen
Die vorliegende Erfindung betrifft ein Verfahren zur Erhöhung der elektrostatischen Aufladbarkeit von Pulverlacken oder Pulvern, in dem man in Pulverlacke oder Pulver, Triarylmethan-, Thiazin- oder Oxazinverbindungen homogen einarbeitet, sowie die Verwendung der so behandelten Pulverlacke oder Pulver zur Oberflächenbeschichtung von festen Gegenständen (Werkstücken).

Die Pulverlacktechnologie kommt u.a. beim Lackieren von Kleingegenständen, wie Gartenmöbeln, Campingartikeln, Haushaltsgeräten, Fahrzeugkleinteilen, Kühlschränken und Regalen, sowie beim Lackieren von kompliziert geformten Werkstücken zur Anwendung. Größtenteils werden metallische Gegenstände lackiert, aber auch beispielsweise Kunststoffe sind mit der Pulverlacktechnologie lackierbar. Gegenüber anderen Lackierverfahren, wie Streichen, Tauchen und konventionellem Spritzen, hat die Pulverlacktechnologie eine Reihe von Vorteilen. Das Lackierverfahren arbeitet beispielsweise lösungsmittelfrei und damit umweltfreundlich und kostengünstiger.

Auch hinsichtlich der Entsorgung, Arbeitssicherheit (Abwesenheit brennbarer Lösungsmittel), Arbeitshygiene und des Umweltschutzes sowie des Zeitaufwandes für einen Lackiervorgang ist das Verfahren vorteilhaft.

Die Pulverlacktechnologie basiert auf dem Prinzip der elektrostatischen Aufladung. Der Pulverlack bzw. das Pulver enthält seine elektrostatische Ladung im allgemeinen nach einem der beiden folgenden Verfahren:
a) Beim Corona-Verfahren wird der Pulverlack bzw. das Pulver an einer geladenen Corona vorbeigeführt und hierbei aufgeladen.
b) Beim triboelektrischen bzw. elektrokinetischen Verfahren wird vom Prinzip der Reibungselektrizität Gebrauch gemacht. Der Pulverlack bzw. das Pulver erhält im Sprühgerät eine elektrostatische Aufladung, die der Ladung des Reibungspartners, im allgemeinen ein Schlauch oder Sprührohr (beispielsweise aus Polytetrafluorethylen), entgegengesetzt ist.

Auch eine Kombination von beiden Verfahren ist möglich.

Als Pulverlackharze werden typischerweise Epoxidharze, carboxyl- und hydroxylgruppenhaltige Polyesterharze und Acrylharze zusammen mit den entsprechenden Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt.

Typische Härterkomponenten für Epoxidharze sind beispielsweise Säureanhydride, Imidazole sowie Dicyandiamid und deren Abkömmlinge. Für hydroxylgruppenhaltige Polyesterharze sind die Härterkomponenten typischerweise beispielsweise Säureanhydride, verkappte Isocyanate, Bisacylurethane, Phenolharze, Melaminharze, für carboxylgruppenhaltige Polyesterharze typischerweise beispielsweise Triglycidylisocyanurate oder Epoxidharze. In Acrylharzen kommen typischerweise biespielsweise Oxazoline, Isocyanate, Triglycidylisocyanurate oder Dicarbonsäuren als Härterkomponenten zur Anwendung.

Das Verfahren der Aufladung der Pulverlacke bzw. Pulver durch Reibungselektrizität hat gegenüber dem Verfahren der Corona-Aufladung eine Reihe von Vorteilen. So entfällt beispielsweise der Aufwand für Erzeugung und Isolation der Hochspannung zum Betreiben der Corona, was beispielsweise die Arbeitssicherheit, insbesondere im Handbetrieb, erhöht. Zudem werden dadurch die Sprühgeräte leichter, was wiederum vor allem für Handsprühgeräte von Bedeutung ist.

Ferner weisen Pulverlacke, die durch Reibung elektrostatisch aufgeladen werden, eine gleichmäßigere Ladung auf und neigen weniger zum Rücksprühen. (Unter "Rücksprühen" versteht man den Effekt, daß Pulverlackteilchen, die bereits auf dem besprühten Werkstück haften, sich von diesem wiederum lösen und nach allen Seiten davonfliegen.) Außerdem können die Sprühlanzen der Applikationsgeräte, die nach dem Prinzip der Reibungsaufladung arbeiten, problemlos um mehrere Meter verlängert werden, dichter an den zu besprühenden Körper herangeführt und damit auch in Rohre oder Hohlräume eingeführt werden.

Dagegen tritt bei Pulverlacken, die nach dem Verfahren der Reibungsaufladung versprüht werden, häufig das Problem auf, daß die Pulverteilchen ungenügend aufgeladen werden und einen schlechten Umgriff am besprühten Werkstück ergeben. (Der Ausdruck "Umgriff" ist eine Maß dafür, inwieweit sich ein Pulverlack am besprühten Werkstück auch an Rückseiten, Hohlräumen, Spalten und vor allem im Sprühschatten und an Innenkanten und -ecken absetzt.)
Der Mangel ungenügender Aufladung ist vor allem bei Pulverlacken, die auf Basis von Polyesterharzen, insbesondere carboxylgruppenhaltigen Polyestern, oder auf Basis von sogenannten Mischpulvern hergestellt worden sind, zu beobachten. Unter Mischpulvern versteht man Pulverlacke, deren Harzbasis aus einer Kombination von Epoxidharz und carboxylgruppenhaltigem Polyesterharz besteht. Die Mischpulver bilden die Basis für die in der Praxis am häufigsten vertretenen Pulverlacke.

Während sich Pulverlacke auf reiner Epoxidharzbasis noch relativ gut triboelektrisch versprühen lassen, arbeitet das Verfahren (triboelektrische Versprühung) mit Mischpulvern oder Pulverlacken auf Polyesterharzbasis im allgemeinen nicht zufriedenstellend. Das bedeutet, daß man bei triboelektrisch versprühten Pulverlacken hinsichtlich der Auswahl der Harze stark eingeschränkt ist. Dies ist insofern sehr unbefriedigend, als gerade über die Harzbasis die verschiedensten Eigenschaften eines Pulverlackes eingestellt werden können. Daher können heute nicht in jedem Fall alle anwendungstechnischen Erfordernisse mit triboelektrisch versprühten Pulverlacken erfüllt werden, was die noch geringe Verbreitung dieses an sich vorteilhaften Verfahren erklärt.

Es bestand daher ein Bedürfnis, Pulverlacken oder Pulvern auf verschiedenster Harzbasis, insbesondere triboelektrisch versprühbaren Pulverlacken, eine höhere und gleichmäßigere Aufladung verleihen zu könne, sowie eine möglichst hohe und einheitliche Abscheidequote beim Besprühen auf dem Werkstück zu erreichen, wobei die sonstigen Eigenschaften des Pulverlackes, wie die mechanischen Eigenschaften und die Verarbeitbarkeit, möglichst wenig beeinträchtigt werden sollen.

Ein bekanntes Verfahren zur Verbesserung der elektrostatischen Aufladung von triboelektrisch versprühbaren Pulverlacken besteht in der Zugabe von Aluminiumoxid (F. Haselmeyer, K. Oehmichen, DEFAZET, 27. Jahrg. Nr. 11, 1973, Seite 529). Bei diesem Vorgehen wird das Aluminiumoxid dem fertigen Pulverlack vor dem Versprühen zugesetzt, typischerweise in Konzentrationen zwischen 1 und 5 %. Hierbei wird aber das genannte Material in den Pulverlack nicht homogen eingearbeitet, was vor allem bei kontinuierlicher Arbeitsweise zu Schwierigkeiten führt.

Wird andererseits das Aluminiumoxid in die Pulverlacke homogen eingearbeitet (dispergiert), so verliert es seine aufladungserhöhende Wirkung. Die Schwierigkeiten beim Zusatz von beispielsweise Aluminiumoxid bestehen darin, daß in der Praxis nur eine vorübergehende Verbesserung der elektrostatischen Aufladung erzielt wird. Hinzu kommen Probleme der einheitlichen Vermengung von Pulverlack und Zusatzstoff, der Entmischung von Pulverlack und Zusatzstoff sowie Probleme der Abrasion in der Aufladezone.

Ein anderer Versuch, die Aufladung von triboelektrisch versprühbaren Pulverlacken zu verbessern, wird in der DE-OS 3600395 A1 beschrieben. In dieser Offenlegungsschrift wird das an sich bekannte Problem der mangelnden Aufladbarkeit von triboelektrisch versprühbaren Pulverlacken ebenfalls dargelegt und als Lösungsmöglichkeit in nur allgemeiner Weise der Zusatz von kapillaraktiven Netzmitteln auf Basis von guaternären Ammoniumverbindungen oder von beispielsweise metallhaltigen Pigmenten, vorzugsweise Zinkstaub, postuliert.

Überraschenderweise wurde nun gefunden, daß spezielle, Triarylmethan-, Thiazin- oder Oxazin-Verbindungen die elektrostatische Aufladbarkeit von Pulverlacken und Pulvern, insbesondere von triboelektrisch versprühten Pulverlacken erhöhen, wenn sie in diese homogen eingearbeitet werden. Die dadurch bewirkte höhere elektrostatische Aufladung hat als weiteren positiven Effekt eine gleichmäßigere Abscheidung des versprühten Pulverlacks oder Pulvers auf dem beschichteten Gegenstand (Werkstück) zur Folge.

Gegenstand der vorliegenden Erfindung ist daher ein Verfahren zur Erhöhung der elektrostatischen Aufladbarkeit von zur Oberflächenbeschichtung von festen Gegenständen (Werkstücken) vorgesehenen Pulverlacken oder Pulvern, indem man in Pulverlacke oder Pulver mindestens eine Triarylmethan-, Thiazin- und/oder Oxazin-Verbindung, wobei sich im Falle der Triarylmethan-Verbindungen, besonders solche eignen, die am aromatischen Ring durch primäre oder sekundäre Aminogruppen, 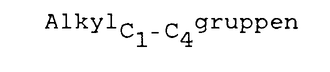
oder Halogenatome, vorzugsweise Chloratome, substituiert sind, oder deren zentrales Kohlenstoffatom dreibindig vorliegt, wie beispielsweise Colour Index Pigment Blue 1,1:2, 2, 3, 8, 9, 9:1, 10, 10:1, 11, 12, 14, 18, 19, 24, 53, 56, 57, 58, 59, 61, 62, 67 oder beispielsweise Colour Index Solvent Blue 2, 3 ,4, 5, 6, 23, 43, 54, 66, 71, 72, 81, 124, 125 sowie die im Colour Index unter Acid Blue und Basic Dye aufgeführten Triarylmethan-Verbindungen, sofern sie hinsichtlich ihrer Temperaturstabilität und Verarbeitbarkeit geeignet sind, wie beispielsweise Colour Index Basic Blue 1, 2, 5, 7, 8, 11, 15, 18, 20, 23, 26, 36, 55, 56, 77, 81, 83, 88, 89, Colour Index Basic Green 1, 3, 4, 9, 10, und wobei sich wiederum ganz besonders eignen Colour Index Solvent Blue 125, Solvent Blue 66, Solvent Blue 124, wobei Solvent Blue 124 in seiner Form als hochkristallines Sulfatsalz ganz besonders geeignet ist, sowie das Trichlortriphenylmethyltetrachloraluminat, sowie die weiteren in den Beispielen der Patentschriften DE-PS 1 919 724 und DE-PS 1 644 619 aufgeführten Triarylmethanverbindungen, und wobei im Falle der Thiazin- oder Oxazin-Verbindungen aus der Klasse der Thiazine Colour Index Basic Blue 9, 24 oder 25 und Solvent Blue 8, und aus der Klasse der Oxazine besonders Colour Index Pigment Violet 23 oder Colour Index Basic Blue 3, 10 oder 12 sowie auch die im Colour Index unter Basic Dye und/oder Acid Dye aufgeführten Thiazine, Oxazine, sofern sie hinsichtlich ihrer Temperaturstabilität und Verarbeitbarkeit geeignet sind, in einer Menge von etwa 0,01 bis etwa 10 Gewichtsprozent, vorzugsweise 0,1 bis etwa 5 Gewichtsprozent, homogen einarbeitet, sowei die Verwendung der so behandelten Pulverlacke oder Pulver zur Oberflächenbeschichtung von festen Gegenständen (Werkstücken) aus Metall, Holz, Kunststoff, Glas, Keramik, Beton, Textilmaterial, Papier oder Kautschuk.

Die erfindungsgemäß zur Anwendung gelangenden Verbindungen können im Pulverlack bzw. Pulver gelöst oder dispergiert vorliegen. Die Einarbeitung kann in an sich bekannter Weise, beispielsweise durch Mischen und Extrudieren oder Einkneten der slazartigen Verbindung in das zugrundeliegende Harz, z.B. Polyesterharz erfolgen. Die erfindungsgemäß eingesetzten Verbindungen können als getrocknete und gemahlene Pulver, als Dispersion oder Masterbatch oder in sonstiger geeigneter Form oder in Lösung zugegeben werden. Ebenso können die Verbindungen auch grundsätzlich schon bei der Herstellung der jeweiligen Pulver(lack)harze zugegeben werden, d.h. im Verlauf von deren Polymerisation oder Polykondensation. Ein Vorteil der erfindungsgemäß eingesetzten Verbindungen besteht darin, daß die Einarbeitung erfolgt, ohne daß hierzu speziell entwickelte Pulverrezepturen erforderlich sind, was wiederum die allgemeine Verwendbarkeit der genannten Verbindungen einschränken würde; die Einarbeitung der Verbindungen besteht lediglich in der Zugabe während des dazu ausgewählten Arbeitsschrittes bei der Pulverlack-bzw. Pulverherstellung; ein zusätzlicher Verfahrensschritt wird nicht benötigt.

Der Vorteil, daß die erfindungsgemäßen Verbindungen im Pulverlack bzw. Pulver gelöst oder dispergiert vorliegen, besteht darin, daß alle Pulverteilchen gleichermaßen eine erhöhte elektrostatische Aufladbarkeit aufweisen, es also nicht zu uneinheitlichen Effekten kommen kann. Ebenso wenig können Uneinheitlichkeiten auf Grund von Zudosierungsschwierigkeiten, ungenügender Vermengung oder wegen Entmischung auftreten.

Die erfindungsgemäß zur Anwendung gelangenden Verbindungen können in pigmentierten oder nicht-pigmentierten (Klarlack), bunten oder unbunten Pulverlack- bzw. Pulverlacksystemen eingesetzt werden. Hierbei sind die erfindungsgemäß eingesetzten Verbindungen wegen ihrer zumeist intensiven Eigenfarbe bevorzugt für farbige Pulverlacke oder Pulver, allein oder in Kombination mit anderen Farbmitteln, geeignet.

Da der Zusatz der erfindungsgemäß eingesetzten Verbindungen zur Erhöhung der Aufladbarkeit und zur Verbesserung von Umgriff und Abscheidequote andererseits die sonstigen mechanischen Eigenschaften und die Verarbeitbarkeit möglichst wenig beeinträchtigen darf, d.h. die Zusatzmenge möglichst gering sein sollte, ist es von großem Vorteil, daß es sich bei den erfindungsgemäß zur Anwendung gelangenden Verbindungen um hochwirksame Produkte handelt, die eine spezielle Auswahl aus den großen Klassen der Triarylmethan-, Thiazin- und Oxazin-Verbindungen darstellen.

Die Pulverlacke bzw. Pulver, in denen die erfindugnsgemäß eingesetzten Verbindungen enthalten sind, können zum Beschichten von beispielsweise Metall, Kunststoff, Holz, Keramik, Beton, Glas, Textilien oder Papier eingesetzt werden.

Von ganz besonderem Vorteil ist, daß die Verwendung der erfindungsgemäß eingesetzten Verbindungen in Pulverlacken oder Pulvern, insbesondere in triboelektrisch versprühbaren Pulverlacken, eine größere Auswahl an Harzen ermöglicht und neue Harzsysteme erschließt. Während bisher im wesentlichen nur Pulverlacke auf reiner Epoxidharzbasis zufriedenstellend triboelektrisch versprühbar waren, kann jetzt auch auf andere Harzsysteme zurückgegriffen werden. Insbesondere können nun auch Pulverlacke auf Basis von Polyesterharzen durch Verwendung der erfindungsgemäß zur Anwendung gelangenden Verbindungen triboelektrisch appliziert werden.

Ein weiterer Vorteil der Verwendung der Verbindungen aus den genannten Substanzklassen ist die erhöhte Abscheidequote der Pulverlacke. Sie ermöglicht kürzere Aufsprühzeiten, was in vielerlei Hinsicht günstig, beispielsweise kostensenkend ist. In Kombination mit der erhöhten Aufladbarkeit und dem verbesserten Umgriff kann erreicht werden, daß nicht nur eine erhöhte Abscheidung des versprühten Pulverlackes auf den großen Flächen erfolgt, sondern auch eine gleichmäßige Beschichtung in Hohlräumen, Innenkanten und -ecken sowie auf der Rückseite der Gegenstände ermöglicht wird. Die besprühten Gegenstände (Werkstücke) lassen sich somit gleichmäßiger beschichten.

Die in den nachstehenden Beispielen aufgeführten Pulverlacke wurden durch Extrudieren hergestellt und sind hinsichtlich des Herstellungsverfahrens und der Teilchengrößenverteilung (mittlere Teilchengröße 50 µm) untereinandner vergleichbar. Die Triboversprühung der Pulver(lacke) wurde mit dem Sprühgerät "Tribo Star" der Firma Intec (Dortmund) mit einem Normsprührohr und einer Sterninnenstange bei maximalem Pulverdurchsatz mit einem Sprühdruck von 3 bar durchgeführt. Der zu besprühende Gegenstand, ein vielfach gekanteter Metallwürfel (Größe ca. 5 x 5 x 5 cm) wurde in einer Spritzkabine aufgehängt und aus ca. 20 cm Abstand direkt von vorne ohne weitere Bewegung des Sprühgerätes besprüht. Die jeweilige Aufladung des versprühten Pulvers wurde mit einem "Meßgerät zur Messung von triboelektrischer Ladung von Pulvern" der Firma Intec (Dortmund) gemessen. Zur Messung wird die Meßantenne des Meßgerätes direkt in die aus dem Sprühgerät austretende Pulverwolke gehalten. Die aus der elektrostatischen Ladung von Pulverlack oder Pulver sich ergebene Stromstärke wird in µA angezeigt. Umgriff und Deckvermögen wurden visuell beurteilt. Insbesondere wurde beachtet, inwieweit Rückseiten, Hohlräume, Innenkanten und -ecken und Vertiefungen hinter Kanten gleichmäßig mit Lack belegt waren. Die visuelle Beurteilung wird gemäß Bewertungsskala 2.1 DIN 53 230 mit Kennzahlen von 0 bis 5 angegeben. Hierbei ist 0 die bestmögliche und 5 die schlechtestmögliche Bewertung.

Die nachstehenden Beispiele dienen zur Erläuterung der Erfindung, ohne sie darauf zu beschränken. Die angegebenen Teile bedeuten Gewichtsteile.

Die EP-A-260 638 betrifft die Verwendung einer Harzpulverzusammensetzung für elektrostatische Beschichtung, welche (1) ein hitzehärtbares Harz oder ein thermoplastisches Harz und (2) ein die elektrische Ladung erhöhendes Mittel, welches in das Harz eingearbeitet ist, enthält. Auf Seite 3, Zeilen 20/21 und im Anspruch 2 dieser Patentanmeldung werden als die Ladung erhöhende Mittel Azinverbindungen, wie beispielsweise C.I. Solvent Black 5, C.I. Solvent Black 7 und deren mit einer höheren Fettsäure modifizierten Verbindungen genannt.

### Beispiel 1 (Vergleichsbeispiel)

Ein Pulverlack der Zusammensetzung

| | |
|---|---|
| ®Alftalat AN 721 (Carboxylgruppenhaltiger Polyester der HOECHST AG) | 399 Teile |
| ®ßeckopox EP 303 (Epoxidharz Typ 3 der HOECHST AG) | 171 Teile |
| ®Kronos 2160 (Titandioxid der Firma Kronos Titan GmbH) | 295 Teile |
| Blanc Fixe F (Bariumsulfat der Firma Sachtleben Chemie GmbH) | 100 Teile |
| ®Additol XL 496 (Verlaufsmittel der HOECHST AG) | 30 Teile |
| Benzoin | 5 Teile |
| | 1000 Teile |

erfährt bei der triboelektrischen Versprühung unter Verwendung einer 38 cm langen Sterninnenstange eine elektrostatische Aufladung, die einer Stromstärke von 0,9 bis 1,2 µA entspricht.

Die visuelle Beurteilung des besprühten Werkstückes (Besprühdauer 5 Sekunden) ergab die Kennzahl 4; die abgeschiedene Pulvermenge nach 5 Sekunden betrug 1,4 g.

Bei Verwendung einer 15 cm langen Sterninnenstange erfährt der Pulverlack bei der triboelektrischen Versprühung eine Aufladung, die einer Stromstärke von 0,3 bis 0,4 µA entspricht.

### Beispiel 2

In einen Pulverlack der in Beispiel 1 beschriebenen Zusammensetzung wird 0,5 Gewichtsprozent von Colour Index Solvent Blue 124 in seiner hochkristallinen Form homogen eingearbeitet. (Die Darstellung dieser Verbindung ist in DE-PS 1 919 724 beschrieben; im Röntgenbeugungsdiagramm ist die Verbindung gekennzeichnet durhc eine starke Bande bei 2 Theta Grad (CuK_{α}) 18,47, drei mittelstarke Banden bei 2 Theta Grad (CuK_{α}) 5,97; 12,01; 13,90; und schwache breite Banden bei zwei Theta Grad (CuK_{α}) 20,0; 21,7; 22,5; 24,8; 28,2; 30,7; 32,2.)
Bei der triboelektrischen Versprühung unter Verwendung einer 38 cm langen Sterninnenstange wird eine elektrostatische Aufladung erreicht, die einer Stromstärke von 1,8 bis 1,9 µA entspricht.

Die visuelle Beurteilung des besprühten Werkstückes (Besprühdauer 5 Sekunden) ergab die Kennzahl 3. Die nach 5 Sekunden abgeschiedene Pulvermenge betrug 1,5 g.

Bei Verwendung einer 15 cm langen Sterninnenstange erfährt der Pulverlack bei der triboelektrischen Versprühung eine Aufladung¸ die einer Stromstärke von 0,4 µA entspricht.

### Beispiel 3

Ein Pulverlack der in Beispiel 2 beschriebenen Zusammensetzung, welcher jedoch statt 0,5 Gewichtsprozent 1 Gewichtsprozent der dort genannten Verbindung enthält, erfährt bei der Triboelektrischen Versprühung unter Verwendung einer 38 cm langen Sterninnenstange eine elektrostatische Aufladung, die einer Stromstärke von 2,4 bis 2,5 µA entspricht.

Die visuelle Beurteilung des besprühten Werkstückes (Sprühdauer 5 Sekunden) ergab die Kennzahl 2. Die nach 5 Sekunden abgeschiedene Pulvermenge betrug 1,6 g.

Bei Verwendung einer 15 cm langen Sterninnenstange erfährt der Pulverlack bei der triboelektrischen Versprühung eine Aufladung, die einer Stromstärke von 0,8 bis 0,9 µA entspricht.

### Beispiel 4

Ein Pulverlack der in Beispiel 2 beschriebenen Zusammensetzung, welcher jedoch statt 0,5 Gewichtsprozent 2 Gewichtsprozent der dort genannten Verbindung enthält, erfährt bie der triboelektrischen Versprühung unter Verwendung einer 38 cm langen Sterninnenstange eine elektrostatische Aufladung, die einer Stromstärke von 2,7 bis 2,8 µA entspricht.

Die visuelle Beurteilung des besprühten Werkstückes (Sprühdauer 5 Sekunden) ergab die Kennzahl 1. Die nach 5 Sekunden abgeschiedene Pulvermenge betrug 1,6 g.

Bei Verwendung einer 15 cm langen Sterninnenstange erfährt der Pulverlack bei der triboelektrischen Versprühung eine Aufladung, die einer Stromstärke von 1,0 bis 1,1 µA entspricht.

### Beispiel 5

In eine Pulverlack der in Beispiel 1 beschriebenen Zusammensetzung wird 0,5 Gewichtsprozent von 4,4′,4˝-Trichlortriphenyltetrachloroaluminat homogen eingearbeitet. (Die Darstellung dieser Verbindung ist in DE-PS 1 644 619 beschrieben.)
Bei der triboelektrischen Versprühung unter Verwendung einer 38 cm langen Sterninnenstange wird eine elektrostatische Aufladung erreicht, die einer Stromstärke von 2,1 bis 2,3 µA entspricht.

Die visuelle Beurteilung des besprühten Werkstückes (Sprühdauer 5 Sekunden) ergab die Kennzahl 2. Die nach 5 Sekunden abgeschiedene Pulvermenge betrug 1,8 g.

### Beispiel 6

Ein Pulverlack der in Beispiel 5 beschriebenen Zusammensetzung, der jedoch statt 0,5 Gewichtsprozent 1 Gewichtsprozent der dort genannten Verbindung enthält, erfährt bei der triboelektrischen Versprühung unter Verwendung einer 38 cm langen Sterninnenstange eine elektrostatische Aufladung, die einer Stromstärke von 2,4 bis 2,5 µA entspricht.

Die visuelle Beurteilung des besprühten Werkstückes (Sprühdauer 5 Sekunden) ergab die Kennzahl 2. Die nach 5 Sekunden abgeschiedene Pulvermenge betrug 1,9 g.

### Beispiel 7 (Vergleichsbeispiel)

Ein Pulver, bestehend aus reinem Stryol-Methacryl-Copolymerisat (®Dialec S 309 der Firma Diamond Shamrock) erfährt bei der triboelektrischen Versprühung sowohl unter Verwendung einer 38 cm langen als auch bei Verwendung einer 15 cm langen Sterninnenstange eine elektrostatische Aufladung, die einer Stromstärke von ±0 µA entspricht.

### Beispiel 8

In ein Pulver der in Beispiel 7 beschriebenen Zusammensetzung wird 1 Gewichtsprozent der in Beispiel 2 genannten Verbindung homogen eingearbeitet. Bei der triboelektrischen Versprühung unter Verwendung einer 38 cm langen Sterninnenstange wird eine elektrostatische Aufladung erreicht, die einer Stromstärke von 0.9 bis 1,1 µA entspricht.

Bei Verwendung einer 15 cm langen Sterninnenstange erfährt das Pulver bei der triboelektrischen Versprühung eine Aufladung, die einer Stromstärke von 0.3 bis 0.5 µA entspricht.

### Beispiel 9

In ein Pulver der in Beispiel 7 beschriebenen Zusammensetzung werden 5 Gewichtsprozent der in Beispiel 2 genannten Verbindung homogen eingearbeitet. Bei der triboelektrischen Versprühung unter Verwendung einer 38 cm langen Sterninnenstange wird eine elektrostatische Aufladung erreicht, die einer Stromstärke von 2,8 bis 3,0 µA entspricht.

Bei Verwendung einer 15 cm langen Sterninnenstange erfährt das Pulver bei der triboelektrischen Versprühung eine Aufladung, die einer Stromstärke von 1,2 bis 1,5 µA entspricht.

### Beispiel 10

In ein Pulver der in Beispiel 7 beschriebenen Zusammensetzung wird 1 Gewichtsprozent der in Beispiel 5 aufgeführten Verbindung eingearbeitet. Bei der triboelektrischen Versprühung unter Verwendung einer 38 cm langen Sterninnenstange wird eine elektrostatische Aufladung erreicht, die einer Stromstärke von 0.9 bis 1,1 µA entspricht.

Bei Verwendung einer 15 cm langen Sterninnenstange erfährt das Pulver bie der triboelektrischen Versprühung eine Aufladung, die einer Stromstärke von 0,3 bis 0,5 µA entspricht.

### Beispiel 11

In ein Pulver, wie in Beispiel 7 beschrieben, wird 1 Gewichtsprozent von Colour Index Solvent Blue 125 homogen eingearbeitet.

Bei der triboelektrischen Versprühung unter Verwendung einer 38 cm langen Sterninnenstange erfährt das Pulver eine Aufladung, die einer Stromstärke von 0.9 bis 1,0 µA entspricht.

Bei Verwendung einer 15 cm langen Sterninnenstange erfährt das Pulver bei der triboelektrischen Versprühung eine Aufladung, die einer Stromstärke von 0,5 bis 0,6 µA entspricht.

### Beispiel 12

In ein Pulver, wie in Beispiel 7 beschrieben, wird 1 Gewichtsprozent Colour Index Pigement Blue 61 (Colour Index Acid Blue 61) homogen eingearbeitet.

Bei der triboelektrischen Versprühung unter Verwendung einer 38 cm langen Sterninnenstange erfährt das Pulver eine Aufladung, die einer Stromstärke von 0,5 bis 0,6 µA entspricht.

Bei Verwendung einer 15 cm langen Sterninnenstange erfährt das Pulver bei der triboelektrischen Versprühung eine Aufladung, die einer Stromstärke von 0,2 bis 0,3 µA entspricht.

### Beispiel 13

In ein Pulver, wie in Beispiel 7 beschrieben, wird 1 Gewichtsprozent Colour Index Acid Blue 93 homogen eingearbeitet.

Bei der triboelektrischen Versprühung unter Verwendung einer 38 cm langen Sterninnenstange erfährt das Pulver eine Aufladung, die einer Stromstärke von 0,3 bis 0,5 µA entspricht.

Bei Verwendung einer 15 cm langen Sterninnenstange erfährt das Pulver bei der triboelektrischen Versprühung eine Aufladung, die einer Stromstärke von 0,1 µA entspricht.

### Beispiel 14

In ein Pulver der in Beispiel 7 beschriebenen Zusammensetzung werden 5 Gewichtsprozent Colour Index Pigment Violet 23 homogen eingearbeitet.

Bei der triboelektrischen Versprühung unter Verwendung einer 38 cm langen Sterninnenstange erfährt das Pulver eine Aufladung, die einer Stromstärke von 2,1 bis 2,3 µA entspricht.

Bei Verwendung einer 15 cm langen Sterninnenstange erfährt das Pulver bei der triboelektrischen Versprühung eine Aufladung, die einer Stromstärke von 1,3 bis 1,4 µA entspricht.

## Patentansprüche

1. Verfahren zur Erhöhung der elektrostatischen Aufladbarkeit von zur Oberflächenbeschichtung von festen Gegenständen vorgesehenen Pulverlacken oder Pulvern, dadurch gekennzeichnet, daß man in Pulverlacke oder Pulver mindestens eine Triarylmethan-, Thiazin-und/oder Oxazin-Verbindung in einer Menge von etwa 0,01 bis etwa 10 Gewichtsprozent homogen einarbeitet, wobei die genannten Verbindungen im Pulverlacksystem bzw. Pulver gelöst oder dispergiert werden.

2. Verfahren nach Anspruch 1, dadurch gekennzeichnet, daß die dort genannten Triarylmethan-Verbindungen am aromatischen Ring durch primäre oder sekundäre Aminogruppen, 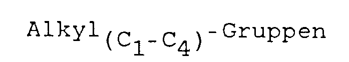 oder Halogenatome substituiert sind, oder daß das zentrale Kohlenstoffatom dreibindig vorliegt.

3. Verfahren nach mindestens einem der Ansprüche 1 und 2, dadurch gekennzeichnet, daß die in Anspruch 1 genannten Triarylmethan-Verbindungen Colour Index Pigment Birne 1,1:2, 2, 3, 8, 9, 9:1, 10, 10:1, 11, 12, 14, 18, 19, 24, 53, 56, 57, 58, 59, 61, 62, 67 oder Colour Index Solvent Blue 2, 3 ,4, 5, 6, 23, 43, 54, 66, 71, 72, 81, 124, 125 oder Colour Index Basic Blue 1, 2, 5, 7, 8, 11, 15, 18, 20, 23, 26, 36, 55, 56, 77, 81, 83, 88, 89, Colour Index Basic Green 1, 3, 4, 9, 10 sind.

4. Verfahren nach Anspruch 1, dadurch gekennzeichnet, daß die dort genannten Thiazin-Verbindungen Colour Index Solvent Blue 8 oder Colour Index Basic Blue 9, 24 oder 25 sind.

5. Verfahren nach Anspruch 1, dadurch gekennzeichnet, daß die dort genannten Oxazin-Verbindungen Colour Index Pigment Violet 23 oder Colour Index Basic Blue 3 sind.

6. Verfahren nach mindestens einem der Ansprüche 1 bis 5, dadurch gekennzeichnet, daß man die in Anspruch 1 genannten Verbindungen in einer Menge von etwa 0,1 bis etwa 5 Gewichtsprozent in die Pulverlacke oder Pulver homogen einarbeitet.

7. Verfahren nach mindestens einem der Ansprüche 1 bis 6, dadurch gekennzeichnet, daß den Pulverlacken oder Pulvern, in welche die in Anspruch 1 genannten Verbindungen homogen eingearbeitet werden, Epoxidharze, hydroxyl- und carboxylgruppenhaltige Polyesterharze oder Acrylharze oder Kombinationen daraus zugrundeliegen.

8. Verfahren nach mindestens einem der Ansprüche 1 bis 7, dadurch gekennzeichnet, daß man die in Anspruch 1 genannten Verbindungen in Form eines getrockneten und gemahlenen Pulvers oder in Form einer Dispersion, eines Masterbatch oder einer Lösung in die Pulverlacke oder Pulver homogen einarbeitet.

9. Verwendung von Pulverlacken oder Pulvern, deren elektrostatische Aufladbarkeit gemäß einem oder mehreren der Ansprüche 1 bis 8 erhöht wurde, zur Oberflächenbeschichtung von Gegenständen aus Metall, Holz, Kunststoff, Glas, Keramik, Beton, Textilmaterial, Papier oder Kautschuk.

10. Verwendung von Pulverlacken oder Pulvern, enthaltend Epoxid-, carboxyl- und hydroxylgruppenhaltige Polyester- oder Acrylharze oder Kombinationen daraus, und, homogen verteilt, etwa 0,01 bis etwa 10 Gewichtsprozent mindestens eine der in Anspruch 1 genannten Verbindungen zur Oberflächenbeschichtung von Gegenständen aus Metall, Holz, Kunststoff, Glas, Keramik, Beton, Textilmaterial, Papier oder Kautschuk.

11. Pulverlacke oder Pulver, enthaltend Epoxid-, carboxylund hydroxylgruppenhaltige Polyester- oder Acrylharze oder Kombinationen daraus, und, homogen verteilt, etwa 0,01 bis etwa 10 Gewichtsprozent mindestens einer Triphenylmethan-, Thiazin- oder Oxazin-Verbindung.

## Claims

1. A process for enhancing the electrostatic chargeability of powder coatings or powders intended for surface-coating solid objects, which comprises homogeneously incorporating at least one triarylmethane, thiazine and/or oxazine compound in an amount from about 0.01 to about 10 percent by weight into powder coatings or powders, where the compounds mentioned are dissolved or dispersed in the powder coating system or powder.

2. The process as claimed in claim 1, wherein the triarylmethane compounds mentioned therein are substituted on the aromatic ring by primary or secondary amino groups, (C₁-C₄)alkyl groups or halogen atoms, or wherein the central carbon atom is trivalent.

3. The process as claimed in at least one of claims 1 and 2, wherein the triarylmethane compounds mentioned in claim 1 are Colour Index Pigment Blue 1,1:2, 2, 3, 8, 9, 9:1, 10, 10:1, 11, 12, 14, 18, 19, 24, 53, 56, 57, 58, 59, 61, 62 or 67, Colour Index Solvent Blue 2, 3, 4, 5, 6, 23, 43, 54, 66, 71, 72, 81, 124 or 125, Colour Index Basic Blue 1, 2, 5, 7, 8, 11, 15, 18, 20, 23, 26, 36, 55, 56, 77, 81, 83, 88 or 89, or Colour Index Basic Green 1, 3, 4, 9 or 10.

4. The process as claimed in claim 1, wherein the thiazine compounds mentioned therein are Colour Index Solvent Blue 8 or Colour Index Basic Blue 9, 24 or 25.

5. The process as claimed in claim 1, wherein the oxazine compounds mentioned therein are Colour Index Pigment Violet 23 or Colour Index Basic Blue 3.

6. The process as claimed in at least one of claims 1 to 5, wherein the compounds mentioned in claim 1 are homogeneously incorporated into the powder coatings or powders in an amount from about 0.1 to about 5 percent by weight.

7. The process as claimed in at least one of claims 1 to 6, wherein the powder coatings or powders into which the compounds mentioned in claim 1 are homogeneously incorporated are based on epoxy resins, hydroxyl- and carboxyl-containing polyester resins or acrylic resins, or combinations thereof.

8. The process as claimed in at least one of claims 1 to 7, wherein the compounds mentioned in claim 1 are homogeneously incorporated in the form of a dry and ground powder or in the form of a dispersion, a masterbatch or a solution into the powder coatings or powders.

9. The use of powder coatings or powders whose electrostatic chargeability has been enhanced as claimed in one or more of claims 1 to 8, for surface-coating objects made of metal, wood, plastic, glass, ceramic, concrete, textile material, paper or rubber.

10. The use of powder coatings or powders containing epoxy resins, carboxyl- and hydroxyl-containing polyester resins or acrylic resins, or combinations thereof, and, distributed homogeneously, about 0.01 to about 10 percent by weight of at least one of the compounds mentioned in claim 1, for surface-coating objects made of metal, wood, plastic, glass, ceramic, concrete, textile material, paper or rubber.

11. A powder coating or powder containing epoxy resins, carboxyl- and hydroxyl-containing polyester resins or acrylic resins, or combinations thereof, and, distributed homogeneously, about 0.01 to about 10 percent by weight of at least one triphenylmethane, thiazine or oxazine compound.

## Revendications

1. Procédé pour augmenter l'aptitude à la charge électrostatique de peintures-poudres ou de poudres prévues pour le revêtement superficiel d'objets solides, caractérisé en ce qu'on incorpore jusqu'à homogénéité dans les peintures-poudres ou les poudres au moins un composé triarylméthane, thiazine et/ou oxazine en une quantité d'environ 0,01 à environ 10 % en poids, les composés mentionnés étant dissous ou dispersés dans le système de peinturespoudres ou dans la poudre.

2. Procédé selon la revendication 1, caractérisé en ce que les composés triarylméthanes qui y sont mentionnés sont sur le noyau aromatique substitués par des groupes amino primaires ou secondaires, des groupes alkyle en C₁-C₄ ou des atomes d'halogène, ou encore que l'atome de carbone central possède trois liaisons.

3. Procédé selon au moins l'une des revendications 1 et 2, caractérisé en ce que les composés triarylméthanes mentionnés dans la revendication 1 sont les composés Colour Index Pigment Blue 1,1:2, 2, 3, 8, 9, 9:1, 10, 10:1, 11, 12, 14, 18, 19, 24, 53, 56, 57, 58, 59, 61, 62, 67 ou Colour Index Solvent Blue 2, 3, 4, 5, 6, 23, 43, 54, 66, 71, 72, 81, 124, 125 ou Colour Index Basic Blue 1, 2, 5, 7, 8, 11, 15, 18, 20, 23, 26, 36, 55, 56, 77, 81, 83, 88, 89 ou Colour Index Basic Green 1, 3, 4, 9, 10.

4. Procédé selon la revendication 1, caractérisé en ce que les composés thiazines qui y sont mentionnés sont les composés Colour Index Solvent Blue 8 ou Colour Index Basic Blue 9, 24 ou 25.

5. Procédé selon la revendication 1, caractérisé en ce que les composés oxazines qui y sont mentionnés sont les composés Colour Index Pigment Violet 23 ou Colour Index Basic Blue 3.

6. Procédé selon au moins l'une des revendications 1 à 5, caractérisé en ce qu'on incorpore jusqu'à homogénéité dans les peintures-poudres ou les poudres les composés mentionnés dans la revendication 1 en une quantité d'environ 0,1 à environ 5 % en poids.

7. Procédé selon au moins l'une des revendications 1 à 6, caractérisé en ce que les peintures-poudres ou les poudres dans lesquelles sont incorporés jusqu'à homogénéité les composés mentionnés dans la revendication 1 sont à base de résines époxydes, de résines de polyester hydroxylées et carboxylées ou de résines acryliques ou de leurs combinaisons.

8. Procédé selon au moins l'une des revendications 1 à 7, caractérisé en ce qu'on incorpore jusqu'à homogénéité dans les peintures-poudres ou les poudres les composés mentionnés dans la revendication 1 sous forme d'une poudre séchèe et broyée ou sous forme d'une dispersion, d'un mélange-maître ou d'une solution.

9. Utilisation de peintures-poudres ou de poudres dont l'aptitude à la charge électrostatique a été augmentée selon l'une ou plusieurs des revendications 1 à 8, pour le revêtement superficiel d'objets en métal, en bois, en plastique, en verre, en céramique, en béton, en un matériau textile, en papier ou en caoutchouc.

10. Utilisation de peintures-poudres ou de poudres contenant des résines époxydes, des résines de polyester carboxylées et hydroxylées ou des résines acryliques ou leurs combinaisons et, en répartition homogène, environ 0,01 à environ 10 % en poids d'au moins l'un des composés mentionnés dans la revendication 1, pour le revêtement superficiel d'objets en métal, en bois, en plastique, en verre, en céramique, en béton, en un matériaux textile, en papier ou en caoutchouc.

11. Peintures-poudres ou poudres contenant des résines époxydes, des résines de polyester carboxylées et hydroxylées ou des résines acryliques ou leurs combinaisons et, en répartition homogène, environ 0,01 à environ 10 % en poids d'au moins un composé triphénylméthane,thiazine ou oxazine.
